# EUROPEAN PATENT APPLICATION

(11) **EP 1 710 468 A1**
(43) Date of publication of application: **11.10.2006**
(21) Application number: 06251788.3
(22) Date of filing: 30.03.2006
(51) Int. Cl.: F16F 15/32

(54) **Method for balancing an article for rotation**

(30) Priority: 04.04.2005 US 98184
(71) Applicant: DANA CORPORATION, Toledo, OH 43615 (US)
(72) Inventor: Appling, Anthony D., Louisville, Kentucky 40245 (US)
(74) Representative: Cheyne, John Robert Alexander M.

(57) **Abstract**

A method for balancing an article for rotation includes the initial steps of providing an article having a surface and providing a balance weight (20,40) including a weight portion (21,41) having an opening and a rivet portion (23,43). The weight portion of the balance weight is disposed against the surface of the article. The rivet portion of the balance weight is inserted within the opening of the weight portion of the balance weight such that a portion of the rivet portion engages the surface of the article. Lastly, the portion of the rivet portion is welded, such as by resistance welding techniques, to the surface of the article.

## Description

### BACKGROUND OF THE INVENTION

This invention relates in general to a method of balancing an article for rotation. In particular, this invention relates to an improved method for securing a balance weight to an unbalanced article so as to balance the article for rotation.

Drive train systems are widely used for generating power from a source and for transferring such power from the source to a driven mechanism. Frequently, the source generates rotational power, and such rotational power is transferred from the source to a rotatably driven mechanism. For example, in most land vehicles in use today, an engine/transmission assembly generates rotational power, and such rotational power is transferred from an output shaft of the engine/transmission assembly through a driveshaft assembly to an input shaft of an axle assembly so as to rotatably drive the wheels of the vehicle. To accomplish this, a typical driveshaft assembly includes a hollow cylindrical driveshaft tube having a pair of end fittings, such as a pair of tube yokes, secured to the front and rear ends thereof. The front end fitting forms a portion of a front universal joint that connects the output shaft of the engine/transmission assembly to the front end of the driveshaft tube. Similarly, the rear end fitting forms a portion of a rear universal joint that connects the rear end of the driveshaft tube to the input shaft of the axle assembly. The front and rear universal joints provide a rotational driving connection from the output shaft of the engine/transmission assembly through the driveshaft tube to the input shaft of the axle assembly, while accommodating a limited amount of angular misalignment between the rotational axes of these three shafts.

Ideally, the driveshaft tube would be formed in the shape of a cylinder that is absolutely round, absolutely straight, and has an absolutely uniform wall thickness. Such a perfectly shaped driveshaft tube would be precisely balanced for rotation and, therefore, would not generate any undesirable noise or vibration during use. In actual practice, however, the driveshaft tubes usually contain variations in roundness, straightness, and wall thickness that result in minor imbalances when rotated at high speeds. To prevent such imbalances from generating undesirable noise or vibration, therefore, it is commonplace to counteract such imbalances by securing balance weights to selected portions of the driveshaft tube. The balance weights are sized and positioned to counterbalance the imbalances of the driveshaft tube such that it is balanced for rotation during use. Balance weights can also be used to counteract any imbalances in the end fittings attached to the driveshaft tube.

Traditionally, driveshaft tubes and end fittings have been formed from steel or other metallic materials having relatively high melting temperatures. In such driveshaft tubes and end fittings, welding has been commonly used to secure the balance weights thereto. More recently, however, driveshaft tubes and end fittings have been formed from aluminum alloys that are lighter in weight than steel. The aluminum alloys are not well suited for welding the balance weights thereto, particularly in the high volume quantities usually associated with the vehicular manufacturing industry. Thus, it would be desirable to provide an improved method for rotatably balancing an article, such as a driveshaft tube or an end fitting adapted for use in a vehicular drive train assembly for transferring rotational power from an engine/transmission assembly to an axle assembly.

### SUMMARY OF THE INVENTION

This invention relates to an improved method for securing a balance weight to an unbalanced article so as to balance the article for rotation. Initially, an article having a surface and a balance weight including a weight portion having an opening and a rivet portion are provided. The weight portion of the balance weight is disposed against the surface of the article. The rivet portion of the balance weight is inserted within the opening of the weight portion of the balance weight such that a portion of the rivet portion engages the surface of the article. Lastly, the portion of the rivet portion is welded, such as by resistance welding techniques, to the surface of the article.

Various objects and advantages of this invention will become apparent to those skilled in the art from the following detailed description of the preferred embodiments, when read in light of the accompanying drawings.

### BRIEF DESCRIPTION OF THE DRAWINGS

Fig. 1 is a side elevational view of a vehicular drive train system including a driveshaft assembly having a balance weight secured thereto in accordance with the method of this invention.

Fig. 2 is an enlarged exploded perspective view of a portion of the driveshaft assembly and a first embodiment of the balance weight illustrated in Fig. 1 shown prior to assembly.

Fig. 3 is a further enlarged sectional elevational view of a portion of the driveshaft assembly and the first embodiment of the balance weight illustrated in Fig. 2 shown during assembly.

Fig. 4 is an enlarged sectional elevational view similar to Fig. 3 showing a second balance weight being secured to the first balance weight.

Fig. 5 is an enlarged exploded perspective view of a portion of the driveshaft assembly and a second embodiment of the balance weight illustrated in Fig. 1 shown prior to assembly.

Fig. 6 is a further enlarged sectional elevational view of a portion of the driveshaft assembly and the second embodiment of the balance weight illustrated in Fig. 5 shown during assembly.

### DETAILED DESCRIPTION OF THE PREFERRED EMBODIMENTS

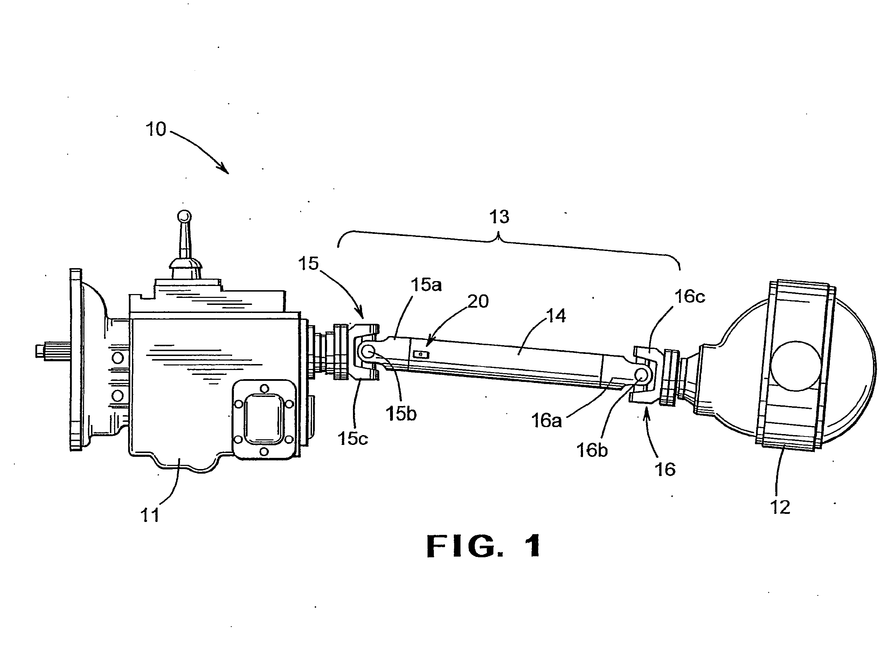

Referring now to the drawings, there is illustrated in Fig. 1 a drive train system, indicated generally at 10, for a vehicle that is adapted to transmit rotational power from a source of rotational power, such as an internal combustion or diesel engine (not shown) to a driven device, such as a plurality of driven wheels (not shown). The illustrated drive train assembly 10 is, for the most part, conventional in the art and is intended merely to illustrate one environment in which this invention may be used. Thus, the scope of this invention is not intended to be limited for use with the specific structure for the vehicle drive train assembly 10 illustrated in Fig. 1 or to vehicle drive train assemblies in general. On the contrary, as will become apparent below, this invention may be used in any desired environment for the purposes described below.

The illustrated drive train system 10 includes a transmission 11 having an output shaft (not shown) that is connected to an input shaft (not shown) of an axle assembly 12 through a driveshaft assembly 13. The transmission 11 is rotatably driven by an engine (not shown) that generates rotational power in a conventional manner. The driveshaft assembly 13 includes a cylindrical driveshaft tube 14 having a center portion and a pair of opposed end portions. The output shaft of the transmission 11 and the input shaft of the axle assembly 12 are typically not co-axially aligned. To accommodate this, a pair of universal joints, indicated generally at 15 and 16, are provided to respectively connect the end portions of the driveshaft tube 14 to the output shaft of the transmission 11 and to the input shaft of the axle assembly 12. The first universal joint 15 includes a tube yoke 15a that is secured to the forward end portion of the driveshaft tube 14 by any conventional means, such as by welding. The first universal joint 15 further includes a cross 15b that is connected to the tube yoke 15a in a conventional manner. Lastly, the first universal joint 15 includes an end yoke 15c that is connected to the output shaft of the transmission 11 and to the cross 15b. Similarly, the second universal joint 16 includes a tube yoke 16a that is secured to the rearward end portion of the driveshaft tube 14 by any conventional means, such as by welding. The second universal joint 16 further includes a cross 16b that is connected to the tube yoke 16a in a conventional manner. Lastly, the second universal joint 16 includes an end yoke 16c that is connected to the cross 16b and to the input shaft of the axle assembly 12. The front and rear universal joints 15 and 16 provide a rotational driving connection from the output shaft of the transmission 11 through the driveshaft tube 14 to the input shaft of the axle assembly 12, while accommodating a limited amount of angular misalignment between the rotational axes of these three shafts.

As is well known in the art, driveshaft tube 14, the tube yokes 15a and 16a, and the other components of the drive train system 10 usually contain variations in shape and wall thickness that result in minor imbalances when rotated at high speeds. This invention provides an improved method for balancing any or all of the driveshaft tube 14, the tube yokes 15a and 16a, and the other components of the drive train system 10 for rotation in order to prevent such rotational imbalances from generating undesirable noise or vibration during use. As will be explained in detail below, such balancing involves the securement of one or more balance weights, indicated generally at 20, at selected locations on any or all of the driveshaft tube 14, the tube yokes 15a and 16a, and the other components of the drive train system 10. In a manner that is well known in the art, the balance weights 20 are sized and positioned to counterbalance the imbalances of the driveshaft tube 14, the tube yokes 15a and 16a, and the other components of the drive train system 10 such that the drive train system 10 is balanced for rotation during use.

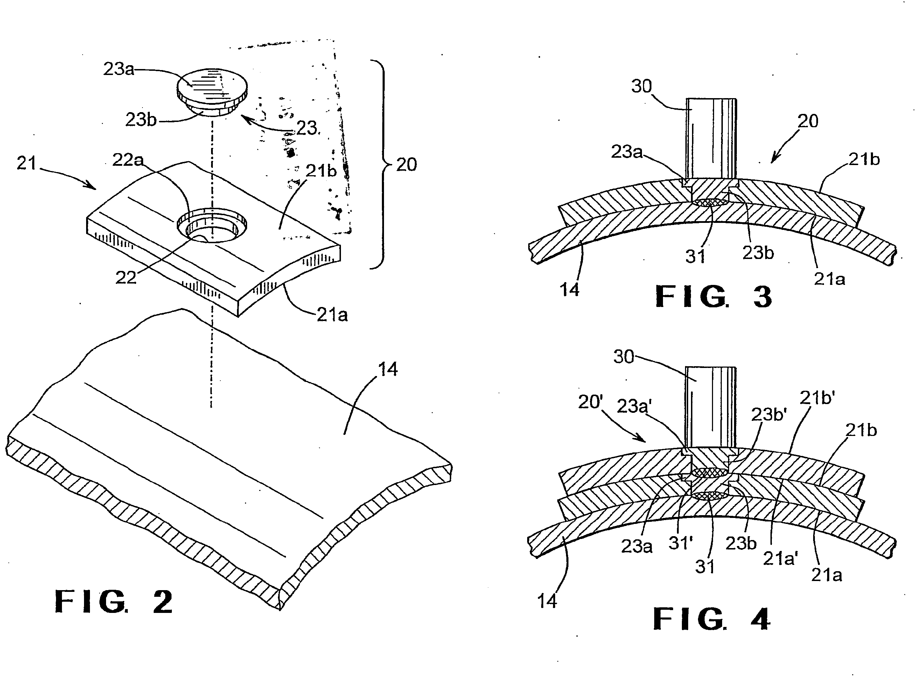

Referring to Figs. 2 and 3, the structure of a first embodiment of the balance weight 20 shown in Fig. 1 is illustrated in detail. As shown therein, the first embodiment of the balance weight 20 includes a weight portion, indicated generally at 21, that is adapted to be secured to the driveshaft tube 14 so as to balance the driveshaft tube 14 for rotation, as described above. The weight portion 21 of the balance weight 20 has an inner surface 21 a that is adapted to engage an outer surface of the driveshaft tube 14 and an outer surface 21b that faces radially outwardly from the driveshaft tube 14. In the illustrated embodiment, the weight portion 21 is generally flat and rectangular in shape, but is curved such that the inner surface 21 a of the weight portion 21 defines a radius of curvature that closely conforms with a radius of curvature defined by the outer surface of the driveshaft tube 14, as best shown in Fig. 3. However, the weight portion 21 may be formed having any desired shape. An opening 22 is formed through the weight portion 21, extending generally radially from the inner surface 21a to the outer surface 21b. In the illustrated embodiment, the opening 22 is generally circular in shape. However, the opening 22 may be formed having any desired shape. In this first embodiment of the weight portion 21, the opening 22 has a recessed area 22a formed thereabout. In the illustrated embodiment, the recessed area 22a extends completely about the opening 22 in the nature of a counterbore or a countersink. However, the recessed area 22a need not extend completely about the opening 22. Also, the recessed area 22a may be embodied as two or more discrete portions that extend inwardly from the opening 22.

The first embodiment of the balance weight 20 also includes a rivet portion, indicated generally at 23, that is adapted to retain the weight portion 21 of the balance weight 20 on the driveshaft tube 14. The rivet portion 23 of the balance weight 20 includes an enlarged head 23a and a body 23b that extends from the head 23a. In the illustrated embodiment, the head 23a of the rivet portion 23 is generally flat and circular in shape, while the body 23b of the rivet portion 23 is generally cylindrical in shape. More specifically, the illustrated head 23a of the rivet portion 23 is sized and shaped to conform with the size of the recessed area 22a of the opening 22 formed through the weight portion 21, while the illustrated body 23b of the rivet portion 23 is sized and shaped to conform with the remainder of the opening 22 formed through the weight portion 21. Thus, the rivet portion 23 can be inserted through and disposed within the opening 22 formed through the weight portion 21, as best shown in Fig. 3. When so inserted, the head 23a of the rivet portion 23 is received within the recessed area 22a of the opening 22 such that the outer surface of the head 23a is flush (or at least generally flush) with the outer surface 21b of the weight portion 21, as shown in Fig. 3. At the same time, the body 23b of the rivet portion 23 is received within the remainder of the opening 22, as also shown in Fig. 3. The axial length of the rivet portion 23 can be determined as desired, but is preferably approximately the same as or slightly longer than the radial thickness of the weight portion 21 as measured from the inner surface 21a to the outer surface 21b thereof. Thus, the inner end of the body 23b of the rivet portion 23 is located flush with or extends slightly radially inwardly from the inner surface 21a of the weight portion 21 when the head 23a of the rivet portion 23 is received within the recessed area 22a of the opening 22.

The head 23a and the body 23b of the rivet portion 23 may be formed having any desired shape or shapes. Preferably, the rivet portion 23 defines an outer dimension that is slightly smaller than an inner dimension defined by the opening 22. Thus, in the illustrated embodiment, the head 23a of the rivet portion 23 defines an outer diameter that is slightly smaller than an inner diameter defined by the recessed area 22a of the opening 22, and the body 23b of the rivet portion 23 defines an outer diameter that is slightly smaller than an inner diameter defined by the remainder of the opening 22. By sizing the rivet portion 23 and the opening 22 in this manner, the rivet portion 23 can be easily inserted through and disposed within the opening 22 formed through the weight portion 21 prior to securing the weight portion 21 to the driveshaft tube 14 as described below. However, if desired, the outer dimension defined by the rivet portion 23 can be approximately the same or slightly larger than the inner dimension defined by the opening 22. By sizing the rivet portion 23 and the opening 22 in this manner, the rivet portion 23 can be press fit within the opening 22 and retained on the weight portion 21 as a pre-assembly prior to securing the weight portion 21 to the driveshaft tube 14, as described in detail below.

Fig. 3 illustrates the manner in which the balance weight 20 is secured to the driveshaft tube 14. As shown therein, the inner surface 21a of the weight portion 21 is initially positioned against the outer surface of the driveshaft tube 14 such that the inner end of the body 23b of the rivet portion 23 is located flush with or extends slightly inwardly from the inner surface 21a of the weight portion 21, as discussed above. The location at which the balance weight 20 is positioned on the driveshaft tube 14 and the size of the balance weight 20 can be determined by any conventional rotational balancing apparatus, the structures and operations of which are well known in the art. Then, a securement tool 30 is moved into engagement with the outer surface of the head 23a of the rivet portion 23. The securement tool 30 may, for example, be embodied as a conventional resistance welder. Resistance welding is a well known thermal process for joining two or more electrically conductive materials together by passing electrical current through those materials. The heat that results from the electrical resistance to the flow of current through those materials creates the actual weld. The heat that is generated using the resistance welding process is very localized on the driveshaft tube 14. Although the temperature at the weld joint is high, the short time duration of the resistance welding process (often in the range of from about ten milliseconds to about twenty milliseconds) results in a very little heat being transmitted to the material of the driveshaft tube 14 surrounding the area that is engaged by the inner end of the body 23b of the rivet portion 23.

In accordance with the method of this invention, the securement tool 30 is initially moved into engagement with the outer surface of the head 23 a of the rivet portion 23, thereby causing the inner surface of the body 23b of the rivet portion 23 to engage the outer surface of the driveshaft tube 14. Then, the securement tool 30 is actuated to cause an electrical current to flow through the rivet portion 23 and the driveshaft tube 14. This flow of electrical current generates a very localized heating in the region of the abutting portions of the inner surface of the body 23b of the rivet portion 23 and the outer surface of the driveshaft tube 14. As a result, the abutting portions of the inner surface of the body 23b of the rivet portion 23 and the outer surface of the driveshaft tube 14 are melted and coalesce so as to form a welded region 31. However, the adjacent regions of the weight portion 21 and the driveshaft tube 14 remain unaffected (or at least substantially unaffected) by this localized generation of heat.

Thus, in order to perform this resistance welding operation, the rivet portion 23 of the balance weight 20 and the driveshaft tube 14 are formed from electrically conductive materials. Preferably, both the rivet portion 23 of the balance weight 20 and the driveshaft tube 14 are formed from the same material. For example, if the driveshaft tube 14 is formed from an aluminum alloy material, then the rivet portion 23 is preferably formed from the same or similar aluminum alloy material. The weight portion 21 of the balance weight 20 can be formed from any desired material. However, it is desirable that the weight portion 21 of the balance weight 20 be formed from a material that has a relatively large weight density in comparison with the weight density of the material that is used to form the driveshaft tube 14. This allows the physical size of the weight portion 21 of the balance weight 20 to be minimized, yet still achieve the desired counterbalancing effect. For example, if the driveshaft tube 14 is formed from an aluminum alloy material, then the weight portion 21 of the balance weight 20 is preferably formed from a steel alloy material. The use of a steel alloy weight portion 21 also minimizes or eliminates any melting of the weight portion 21 that might otherwise occur during the resistance welding operation. Thus, it can be seen that the resistance welding operation is effective to secure the rivet portion 23 of the balance weight 20 to the driveshaft tube 14. The enlarged head 23a of the rivet portion 23 mechanically retains the weight portion 21 of the balance weight in the desired position on the driveshaft tube 14.

If necessary, one or more additional balance weights (not shown) can be secured to other portions of the driveshaft tube 14 or elsewhere on the drive train system 10 in order to properly balance the drive train system 10 for rotation. Alternatively, as shown in Fig. 4, a second balance weight, indicated generally at 20', can be secured to the first balance weight 20. The second balance weight 20' is similar in structure to the first balance weight 20 described above, and like reference numbers are used to indicate similar structures. The second balance weight 20' can be secured to the head 23a of the rivet portion 23 of the first balance weight 20 using the same method described above. As shown in the illustrated embodiment, a second welded region 31' is created to secure the body 23b' of the second balance weight 20' to the outer surface of the head 23a of the first balance weight 20. The securement of the second balance weight 20' can be performed either before, during, or after the securement of the first balance weight 20 to the outer surface of the driveshaft tube 14.

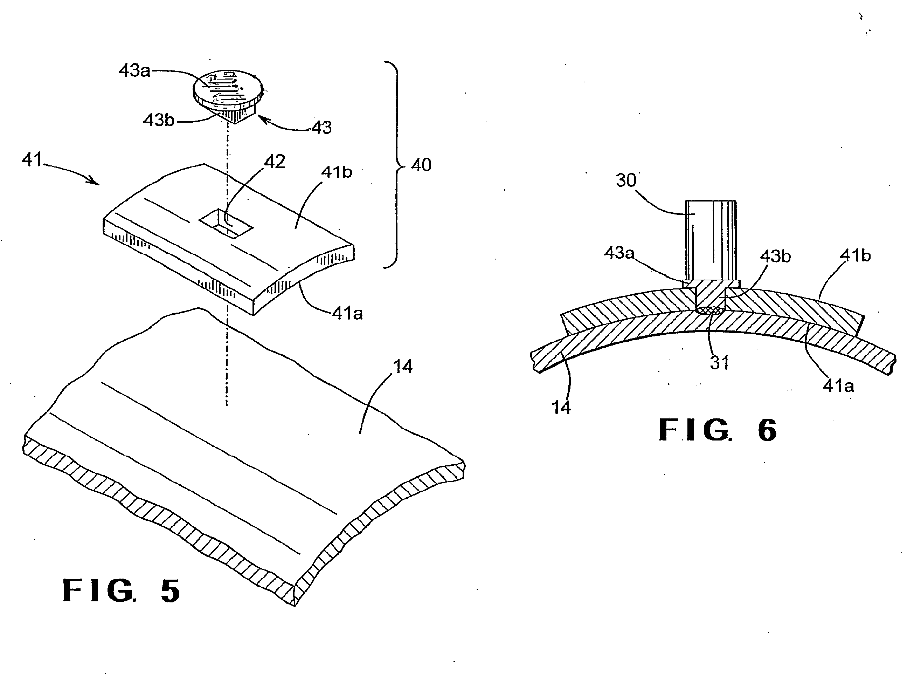

Referring to Figs. 5 and 6, the structure of a second embodiment of a balance weight, indicated generally at 40 is illustrated in detail. As shown therein, the second embodiment of the balance weight 40 includes a weight portion, indicated generally at 41, that is adapted to be secured to the driveshaft tube 14 so as to balance the driveshaft tube 14 for rotation, as described above. The weight portion 41 of the balance weight 40 has an inner surface 41 a that is adapted to engage an outer surface of the driveshaft tube 14 and an outer surface 41b that faces outwardly from the driveshaft tube 14. In the illustrated embodiment, the weight portion 41 is generally flat and rectangular in shape, but is curved such that the inner surface 41 a of the weight portion 41 defines a radius of curvature that closely conforms with a radius of curvature defined by the outer surface of the driveshaft tube 14, as best shown in Fig. 6. However, the weight portion 41 may be formed having any desired shape. An opening 42 is formed through the weight portion 41, extending from the inner surface 41a to the outer surface 41b. In the illustrated embodiment, the opening 42 is generally rectangular in shape. However, the opening 42 may be formed having any desired shape. In this second embodiment of the weight portion 41, the opening 42 is not provided with a recessed area similar to the recessed area 22a described above. However, such a recessed area may be provided if desired.

The second embodiment of the balance weight 40 also includes a rivet portion, indicated generally at 43, that is adapted to secure the weight portion 41 of the balance weight 40 to the driveshaft tube 14. The rivet portion 43 of the balance weight 40 includes an enlarged head 43a and a body 43b that extends from the head 43a. In the illustrated embodiment, the head 43a of the rivet portion 43 is generally flat and circular in shape, while the body 43b of the rivet portion 23 is generally rectilinear in shape. More specifically, the illustrated body 43b of the rivet portion 43 is sized and shaped to conform with the remainder of the opening 42 formed through the weight portion 41. Thus, the rivet portion 43 can be inserted through and disposed within the opening 42 formed through the weight portion 41, as best shown in Fig. 6. When so inserted, the head 43a of the rivet portion 43 is not received within the recessed area 42a of the opening 42. but rather abuts the outer surface 41b of the weight portion 41, as shown in Fig. 6. At the same time, the body 43b of the rivet portion 43 is received within the remainder of the opening 42, as also shown in Fig. 6. The axial length of the rivet portion 43 can be determined as desired, but is preferably approximately the same as or slightly longer than the radial thickness of the weight portion 41 as measured from the inner surface 41a to the outer surface 41b thereof. Thus, the inner end of the body 43b of the rivet portion 43 is located flush with or extends slightly inwardly from the inner surface 41a of the weight portion 41.

The head 43a and the body 43b of the rivet portion 43 may be formed having any desired shape or shapes. Preferably, the rivet portion 43 defines an outer dimension that is slightly smaller than an inner dimension defined by the opening 42. Thus, in the illustrated embodiment, the body 43b of the rivet portion 43 defines an outer diameter that is slightly smaller than an inner diameter defined by the remainder of the opening 42. By sizing the rivet portion 43 and the opening 42 in this manner, the rivet portion 43 can be easily inserted through and disposed within the opening 42 formed through the weight portion 41 prior to securing the weight portion 41 to the driveshaft tube 14 as described below. However, if desired, the outer dimension defined by the rivet portion 43 can be approximately the same or slightly larger than the inner dimension defined by the opening 42. By sizing the rivet portion 43 and the opening 42 in this manner, the rivet portion 43 can be press fit within the opening 42 and retained on the weight portion 41 as a pre-assembly prior to securing the weight portion 41 to the driveshaft tube 14 as described below. The securement of the second embodiment of the balance weight 40 to the driveshaft tube 14 can be accomplished using the securement tool 30 in the same manner as described above.

In accordance with the provisions of the patent statutes, the principle and mode of operation of this invention have been explained and illustrated in its preferred embodiments. However, it must be understood that this invention may be practiced otherwise than as specifically explained and illustrated without departing from its spirit or scope.

## Claims

1. A method for balancing an article for rotation comprising the steps of:
(a) providing an article having a surface;
(b) providing a balance weight including a weight portion having an opening and a rivet portion;
(c) disposing the weight portion of the balance weight against the surface of the article;
(d) inserting the rivet portion of the balance weight within the opening of the weight portion of the balance weight such that a portion of the rivet portion of the balance weight engages the surface of the article; and
(e) welding the portion of the rivet portion of the balance weight to the surface of the article.

2. The method defined in Claim 1 wherein said step (b) is performed by providing the rivet portion with a head and a body, and wherein said step (d) is performed by inserting the rivet portion of the balance weight within the opening of the weight portion of the balance weight such that the head of the rivet portion extends over the weight portion and the body of the rivet portion extends through the opening into engagement with the surface of the article.

3. The method defined in Claim 2 wherein the body of the rivet portion and the opening formed through the weight portion are similarly shaped.

4. The method defined in Claim 1 wherein said step (b) is performed by providing the opening with a recessed area.

5. The method defined in Claim 4 wherein said step (b) is performed by providing the rivet portion with a head and a body, and wherein said step (d) is performed by inserting the rivet portion of the balance weight within the opening of the weight portion of the balance weight such that the head of the rivet portion is received within the recessed area and the body of the rivet portion extends through the opening into engagement with the surface of the article.

6. The method defined in Claim 5 wherein the head of the rivet portion and the recessed area of the opening formed through the weight portion are similarly shaped.

7. The method defined in Claim 5 wherein the body of the rivet portion and the opening formed through the weight portion are similarly shaped.

8. The method defined in Claim 4 wherein the head of the rivet portion is received within the recessed area so as to be generally flush with the weight portion.

9. The method defined in Claim 1 wherein said step (b) is performed by providing the weight portion and the rivet portion as a pre-assembly.

10. The method defined in Claim 1 wherein said step (d) is performed by resistance welding.
